# EUROPEAN PATENT APPLICATION

(11) **EP 3 499 407 A1**
(43) Date of publication of application: **19.06.2019**
(21) Application number: 17465591.0
(22) Date of filing: 13.12.2017
(51) Int. Cl.: G06K 9/00

(54) **DETERMINATION OF A ROAD SURFACE CONDITION**

(71) Applicant: Continental Automotive GmbH, 30165 Hannover (DE)
(72) Inventor: Dragan, Andrei, 550036 Sibiu (RO)

(57) **Abstract**

The present disclosure relates to road surface condition detector for detecting or determining a road surface condition. The detector includes a trace of electrically conductive ink or paint adhered to the surface of the road. The trace includes at least one region adapted to allow an electronic interrogator to determine the electrical continuity of the trace. The trace has a regular pattern on the road. Specifically, the regular pattern may be a matrix pattern which is configured to provide an indication of or position of a specific road surface condition such as a crack. The matrix may divide the road into plurality of segments, each segment having a pre-determined length.

## Description

### TECHNICAL FIELD

The present disclosure relates to a device and method for determining or detecting a road surface condition. The present disclosure specifically relates to a device and method for detecting cracks or gaps on a road surface.

### BACKGROUND

For autonomous driving acquisition of information about the condition of a road surface may be essential. The information may include cracks or holes in the road due to which a vehicle needs to divert from its original path or needs to slow down if they cannot be diverted. Such information may also road surface temperature or friction coefficient in order to determine an adequate speed or stopping way.

A couple of methods to determine the condition of a road surface are known in the art such as acquisition of camera or infrared images of the road surface in order to determine cracks, holes and further water or ice on the road surface which affects the friction. Alternatively, any other sensor mounted on a vehicle or a surveillance aircraft may be employed to determine a road surface condition. However, for autonomous driving, an acquisition of a representation of the road surface condition in advance, i.e. prior to which a sensor carrying vehicle passes the crack or ice covered region, may be desirable in order to control the autonomous driving of the vehicle before it can determine the road surface condition by itself.

### DISCLOSURE OF THE INVENTION

It is therefore an objective of the present disclosure to address the issues stated above and to provide a device and method for determining or detecting a road surface condition that works nicely.

This objective is achieved by a method according to the independent method claim and a detector according to the independent apparatus claim. Dependent claims relate to further aspects of the present disclosure.

The present disclosure relates to road surface condition detector for detecting or determining a road surface condition. The detector includes a trace of electrically conductive ink or paint adhered to the surface of the road. The trace includes at least one region adapted to allow an electronic interrogator to determine the electrical continuity of the trace. The trace has a regular pattern on the road. Specifically, the regular pattern may be a matrix pattern which is configured to provide an indication of or position of a specific road surface condition such as a crack. The matrix may divide the road into plurality of segments, each segment having a pre-determined length.

By determining the electrical continuity of the trace, e.g. a voltage drop, an electric current or an electric resistance, within any two points of the trace, a specific condition or characteristic of the road surface can be determined.

Accordingly, the trace may provide at least two terminals for connection to the electronic interrogator. The electronic interrogator may be configured to provide an indication of a size or a position of the road surface condition. Specifically, the electronic interrogator may configured to determine an electric resistance between the two terminals. Based on the electric resistance compared to a default resistance a road surface condition such as a crack may be identified. The comparison may take place within the electronic interrogator or within a backend-device to which the determined electric resistance may be communicated by the electronic interrogator. The default resistance may be provided by a lookup table which may be indexed by the length of the trace between the two terminals and the conductive ink or paint the trace is made of. Alternatively, default values for the electric resistance may be computed on the fly.

The two terminals may be interrogator wirelessly or wireline by the electronic interrogator. The two terminals may be antenna structures to which antennas included in the electronic interrogator may couple electromagnetically.

The electronic interrogator may probe the entire matrix pattern of the trace. For this purpose the trace may provide at least two terminals for each segment of the plurality of segments of the matrix pattern. When done, according to the granularity of the matrix structure an entire representation of the road surface condition can be determine by the electronic interrogator.

Particularly, at least one segment of the matrix may be located at an axis of this road. Accordingly, the middle of the road may be probed to determine cracks stretching perpendicular to the road axis.

Particularly, at least one segment of the matrix may be located at the edge of the road. Accordingly, the edge of the road may be probed to determine cracks at the edge of the road. However, the road surface condition is not limited to cracks. It may be characteristic which affects the electric conductivity of the paint or ink adhered to the road surface.

For example the ink or paint may be sensitive to temperature or humidity. Accordingly, the road surface temperature or the ground humidity may be determined without employing additional sensors.

For example, if a high temperature is determined for a large number of segments within the matrix grid and for some segments the electric conductivity is disrupted at all, it may be assumed that the road surface is damaged due to heat expansion. No aircraft surveillance needs to be employed to determine the road surface condition.

The electronic interrogator as described above may be mounted in a vehicle or a fleet of vehicles that are communicatively coupled to a backend device or any other monitoring or surveillance entity. An entire representation of the road surface condition may accumulated in the backend device over time as vehicle communicate values for the electric resistance for each segment of the trace the vehicle pass by.

The present disclosure further relates to a method for monitoring a surface of a road. The method includes adhering a trace of electrically conductive ink or paint to the surface of the road, said trace including at least one region adapted to allow an electronic interrogator to determine electrical continuity of the trace, wherein the trace has a regular pattern; and determining an electrical continuity of the trace using the electronic interrogator.

### DESCRIPTION OF THE FIGURES

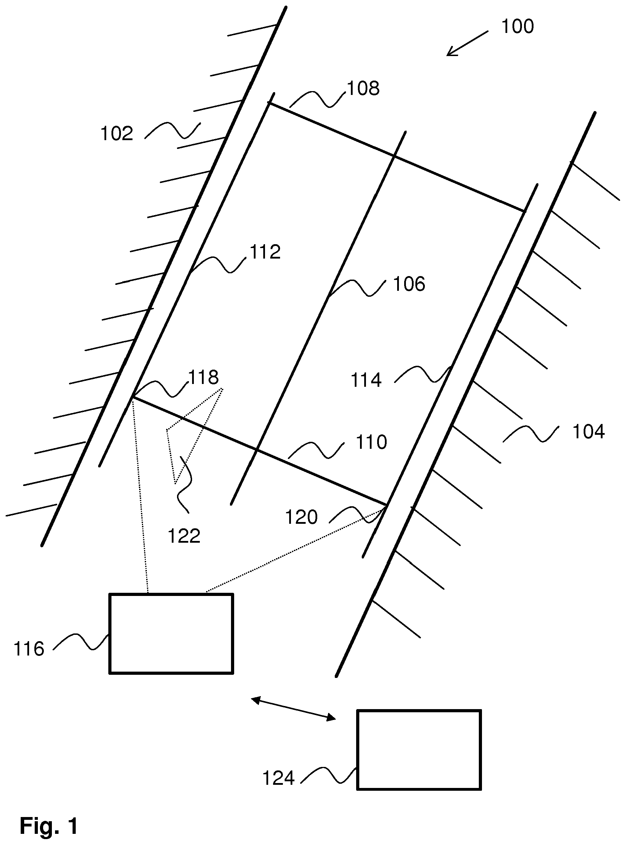

Different implementations of the present invention are shown in the drawings and will be described and discussed below. Therein, Fig. 1 shows a diagram showing a restricted area and an adjacent area

### DETAILED DESCRIPTION

Fig. 1 shows a sector of road 100 confined by the left-hand edge 102 and the right-hand edge 104. The road surface includes a crack comprised in the area indicated by the dotted lined triangle. In order to detect this crack, a crack detector is provided. The crack detector includes a segmented trace in matrix form with segments 106, 108, 110, 112 and 114. The segmented trace is adhered to the surface of road 100. The segment trace consists of an electrically conductive ink or paint. Segment 110 has terminals 118 and 120 for connection to electronic interrogator 116 for verifying continuity of segment 110. The electronic interrogator is electrically coupled to terminals 118 and 120, e.g. by wireline connection or by means of wireless electromagnetic coupling. Terminals 118 and 120 may be implemented as antennas. Electronic interrogator 116 determines the electric resistance of segment of 110 by impinging a voltage on terminals 118 and 120 and measuring a current flowing to segment 110. Electronic interrogator 116 stores the determined resistance to a memory. Electronic interrogator 116 includes one or more processors configured to compare the thus determined value of the resistance with default values for the resistance for the length of the segment and the electrically ink or paint used for the trace. In case of a crack electronic interrogator 115 determines that the determined resistance is much higher than the default resistance for a segment of the same length.

Each of the segments shown in Fig. 1 may have two terminals, one at a first end and one at a second end of the terminal. As electronic interrogator 116 moves along road surface 100 it may connect to any of the two terminals and determine the resistance for each of the plurality of segments. Electronic interrogator 116 may store each determined resistance to a memory. Over time a data set representing the condition of road surface 100 is generated.

Electronic interrogator 100 may be comprised in a vehicle or even a fleet vehicles and may include means for wireless communications such as a cellular transceiver to communicate the determined resistance values to backend device 124. By means of interrogators comprised in a plurality of vehicles, statistically confident resistance values may be accumulated in backend device 124. Accordingly, backend device 124 accumulates a representation of the road surface condition having a high confidence.

The default values for the resistances may either be stored in a lookup-table within electronic interrogator 116 or may be computed online by means of the one or more processor comprised in electronic interrogator 116. Alternatively, the comparison of the determined resistance values with the default values may take place in the backend-device 124. Accordingly, electronic interrogator 116 communicates the determined resistance values to backend-device 124 and backend-device either compares the received resistance values with a lookup table stored in its own memory or computes the default resistance values by itself and then compares the received resistance values with the computed default resistance values.

The road surface condition detector and method described above is not limited to assisting to autonomous driving but to may be employed to a variety of applications such as data collection for road construction, humidity detection and temperature detetection.

## Claims

1. A road surface condition detector for detecting or determining a road surface condition, the road surface condition detector comprising:
a trace of electrically conductive ink or paint adhered to the surface of the road, said trace including at least one region adapted to allow an electronic interrogator to determine electrical continuity of the trace, wherein the trace has a regular pattern.

2. The road surface condition detector of claim 1, wherein the regular pattern is a matrix which is configured to provide an indication of a size or position of a road surface condition.

3. The road surface condition detector of claim 2, wherein the matrix divides the road into a plurality segments, each segment having a pre-determined length.

4. The road surface condition detector of any of claims 1 to 3, wherein the trace provides at least two terminals for connection to the electronic interrogator; and wherein the electronic interrogator is configured to provide an indication of a size or a position of the road surface condition.

5. The road surface condition detector of any of claims 1 to 4, wherein the trace provides at least two terminals for connection to the electronic interrogator; and wherein the electronic interrogator is configured to determine a resistance between the two terminals.

6. The road surface condition detector of claim 5, wherein the electronic interrogator is configured to determine the road surface condition between the two terminals based on the determined resistance compared to a default resistance.

7. The road surface condition detector of claim 6, wherein the trace provides at least two terminals for each segment of the plurality of segments.

8. The road surface condition detector of any of claims 1 to 7, wherein at least one segment of the matrix is located at an axis of the road.

9. The road surface condition detector of any of claims 1 to 8, wherein at least one segment of the matrix is located at the edge of the road.

10. Method for monitoring a surface of a road, the method comprising:
adhering a trace of electrically conductive ink or paint to the surface of the road, said trace including at least one region adapted to allow an electronic interrogator to determine electrical continuity of the trace, wherein the trace has a regular pattern; and
determining an electrical continuity of the trace using the electronic interrogator.
